# FASCICULE DE BREVET EUROPEEN

(11) **EP 0 833 282 B1**
(45) Date de publication et mention de la délivrance du brevet: **06.02.2002**
(21) Numéro de dépôt: 97402257.6
(22) Date de dépôt: 29.09.1997
(51) Int. Cl.: G06K 7/06, G06K 7/08, G07C 9/00

(54) **Lecteur électronique de cartes pour la commande d'une serrure**
Elektronischer Kartenleser zum Steuern eines Schlosses
Electronic card reader for controlling a lock

(30) Priorité: 30.09.1996 FR 9611852
(43) Date de publication de la demande: 01.04.1998
(73) Titulaire: FONTAINE S.A., F-75001 Paris (FR)
(72) Inventeur: Bertaux, Gilles, F-14600 Equemauville-Honfleur (FR)
(74) Mandataire: Dawidowicz, Armand

(56) Documents cités:
- EP-A- 0 134 110
- EP-A- 0 348 932
- WO-A-88/03295
- WO-A-95/14284
- DE-A- 4 336 511
- FR-A- 2 703 171
- US-A- 4 833 310

## Description

La présente invention concerne un lecteur électronique de cartes pour la commande d'une serrure, du type comportant une entrée de carte codée, une alimentation électrique, des moyens de lecture du code de la carte, au moins une mémoire modifiable, des moyens d'inscription d'un code dans ladite mémoire, des moyens de comparaison du code de la carte et du code inscrit dans la mémoire et des moyens d'émission d'un signal de déverrouillage de la serrure dans le cas d'une coïncidence entre les codes comparés, les moyens de lecture comportent des organes de lecture d'au moins deux types de cartes différents, par exemple des organes de lecture de cartes magnétiques et des organes de lecture de cartes à puce, la mémoire est agencée pour contenir un logiciel de lecture pour chaque type de carte utilisable.

Ce type de lecteur électronique est généralement utilisé pour la commande d'une serrure électromécanique à contrôle électronique. On utilise fréquemment ce type de serrure lorsqu'on veut exercer un contrôle de l'accès dans différents lieux par exemple, dans des bureaux, dans les hôtels, etc.

En général, le lecteur électronique de ce type de serrure est réalisé de telle manière que toutes les fonctions sont intégrées dans l'électronique de gestion, c'est-à-dire les fonctions gérant la serrure elle-même, par exemple la gestion des différents degrés d'habilitation d'accès, mais également d'autres fonctions telles que l'enregistrement des passages, en particulier la mémorisation de la date et de l'heure de chaque transaction, une gestion horaire automatique, etc.

Les lecteurs électroniques connus présentent donc de grands avantages d'utilisation et de sécurité mais ils présentent cependant un inconvénient.

En effet, l'électronique de gestion est normalement limitée au traitement d'un type de carte. Ainsi, dans les lecteurs électroniques actuels, dans le cas de l'utilisation d'une électronique de gestion associée à une carte magnétique, les moyens de lecture sont en conséquence limités à des organes de lecture d'une carte magnétique. Lorsqu'on veut utiliser une électronique de gestion fonctionnant avec une carte à puce, il convient alors d'intervenir sur le lecteur électronique en modifiant l'électronique de gestion et en changeant également les moyens de lecture. Ceci nécessite donc une intervention relativement lourde et coûteuse.

WO-A-95 14 284 décrit un lecteur selon le préambule de la revendication 1.

La présente invention a pour objet un lecteur électronique de cartes, une simple intervention permettant au lecteur électronique de fonctionner soit avec une carte à puce, soit avec une carte magnétique.

A cet effet, le lecteur électronique de cartes selon l'invention est caractérisé en ce que le lecteur électronique est muni de moyens de connexion d'un organe de lecture et du logiciel associé avec l'alimentation électrique supprimant la connexion des autres organes de lecture et du logiciel associé avec ladite alimentation électrique.

Ainsi, il suffit d'intervenir au niveau des organes de connexion pour pouvoir passer d'un fonctionnement du lecteur électronique en lecture de carte magnétique à un fonctionnement en lecture de carte à puce.

Il n'y a donc plus besoin de changer les moyens de lecture comme c'était le cas auparavant et/ou d'intervenir sur l'électronique de gestion puisque le lecteur électronique selon l'invention comporte à la fois un logiciel de lecture associé aux organes de lecture de carte magnétique et un logiciel de lecture associé aux organes de lecture de carte à puce.

La permutation d'un type de fonctionnement du lecteur électronique à l'autre se fait de manière simple, lesdits moyens de connexion étant de préférence constitués par une barrette de connexion associée au type de carte sélectionné. Il convient par conséquent de mettre en place la barrette de connexion souhaitée.

De préférence, le lecteur électronique selon l'invention comporte une mémoire agencée pour mémoriser les données d'utilisation successives de cartes, ladite mémoire pouvant être lue et remise à zéro au moyen d'un appareil séparé tel qu'un enquêteur.

Dans un lecteur électronique de cartes selon l'invention, la lecture de la mémoire, sa remise à zéro, sa maintenance et son éventuelle reconfiguration sont effectuées par l'intermédiaire d'un desdits organes de lecture, par exemple l'organe de lecture de carte à puce.

Dans ce cas, un enquêteur pour un lecteur électronique selon l'invention comporte une carte à puce permettant son branchement sur ledit lecteur électronique. Cet enquêteur permet également de réaliser la mise en service et la maintenance du lecteur électronique.

On augmente ainsi la sécurité des serrures comportant un lecteur électronique selon l'invention. En effet, le branchement d'un enquêteur était effectué auparavant par l'intermédiaire d'une fiche DIN qui pouvait constituer un point d'accessibilité au mécanisme de la serrure ou à l'intérieur du lecteur électronique lui-même.

Un lecteur électronique selon l'invention peut donc fonctionner soit avec des cartes magnétiques soit avec des cartes à puces sans que la permutation d'un type de fonctionnement à l'autre entraîne des manipulations importantes du lecteur et un coût trop élevé.

## Revendications

1. Lecteur électronique de cartes pour la commande d'une serrure, du type comportant une entrée de carte codée, une alimentation électrique, des moyens de lecture du code de la carte, au moins une mémoire modifiable, des moyens d'inscription d'un code dans ladite mémoire, des moyens de comparaison du code de la carte et du code inscrit dans la mémoire et des moyens d'émission d'un signal de déverrouillage de la serrure dans le cas d'une coïncidence entre les codes comparés, les moyens de lecture comportent des organes de lecture d'au moins deux types de cartes différents, par exemple des organes de lecture de cartes magnétiques et des organes de lecture de cartes à puce, la mémoire est agencée pour contenir un logiciel de lecture pour chaque type de carte utilisable
**caractérisé en ce que** le lecteur électronique est muni de moyens de connexion d'un organe de lecture et du logiciel associé avec l'alimentation électrique supprimant la connexion des autres organes de lecture et du logiciel associé avec ladite alimentation électrique.

2. Lecteur électronique selon la revendication 1,
**caractérisé en ce que** lesdits moyens de connexion sont constitués par une barrette de connexion associée au type de carte sélectionné.

3. Lecteur électronique selon l'une des revendications 1 et 2,
**caractérisé en ce que** le lecteur électronique comporte une mémoire agencée pour mémoriser les données d'utilisation successives de cartes, ladite mémoire pouvant être lue et remise à zéro au moyen d'un appareil séparé tel qu'un enquêteur.

4. Lecteur électronique selon la revendication 3,
**caractérisé en ce que** la lecture de la mémoire, sa remise à zéro, sa maintenance et son éventuelle reconfiguration sont effectuées par l'intermédiaire d'un desdits organes de lecture, par exemple l'organe de lecture de carte à puce.

5. Lecteur électronique selon la revendication 4,
**caractérisé en ce que** lesdits organes de lecture de carte à puce permettent le branchement d'un enquêteur comportant une carte à puce.

## Claims

1. Electronic card reader for controlling a lock, of the type comprising an entry for a coded card, a power supply, means for reading the card code, at least one modifiable memory, means for writing a code to the said memory, means for comparing the card code and the code written to the memory and means for transmitting a signal for unlocking the lock if there is agreement between the codes compared,
the read means comprise read elements for at least two different types of card, for example read elements for magnetic cards and read elements for chip cards, the memory is equipped to hold read software for each type of card that can be used, **characterised in that** the electronic reader is equipped with means for connection of a read element and the associated software to the power supply, suppressing the connection of the other read elements and the associated software to the said power supply.

2. Electronic reader according to Claim 1,
**characterised in that** the said means for connection comprise a connecting strip associated with the type of card selected.

3. Electronic reader according to one of Claims 1 and 2,
**characterised in that** the electronic reader has a memory equipped to memorise data on successive use of cards, the said memory being able to be read and reset to zero by means of separate equipment such as an interrogator.

4. Electronic reader according to Claim 3,
**characterised in that** reading of the memory, its resetting to zero, its maintenance and its optional reconfiguration are carried out by means of one of the said read elements, for example the chip card read element.

5. Electronic reader according to Claim 4,
**characterised in that** the said chip card read elements permit the connection of an interrogator containing a chip card.

## Patentansprüche

1. Elektronischer Kartenleser zum Steuern eines Schlosses, umfassend einen Codekarteneingang, eine elektrische Stromversorgung, Lesemittel zum Lesen des Codes der Karte, wenigstens einen veränderbaren Speicher, Schreibmittel zum Einschreiben eines Codes in den besagten Speicher, Vergleichsmittel zum Vergleichen des Codes der Karte und des in den Speicher eingeschriebenen Codes und Sendemittel zum Senden eines Signals zur Entriegelung des Schlosses im Falle einer Übereinstimmung zwischen den verglichenen Codes, wobei die Lesemittel Leseorgane zum Lesen von wenigstens zwei verschiedenen Kartenarten umfassen, beispielsweise Leseorgane zum Lesen von Magnetkarten und Leseorgane zum Lesen von Chipkarten, wobei der Speicher so gestaltet ist, daß er eine Lesesoftware für jede benutzbare Kartenart enthalten kann,
**dadurch gekennzeichnet, daß** der elektronische Kartenleser mit Anschlußmitteln für den Anschluß eines Leseorgans und der zugehörigen Software an die elektrische Stromversorgung ausgerüstet ist, die den Anschluß der anderen Leseorgane und der zugehörigen Software an die besagte elektrische Stromversorgung ausschließen.

2. Elektronischer Kartenleser nach Anspruch 1,
**dadurch gekennzeichnet, daß** die besagten Anschlußmittel aus einer der ausgewählten Kartenart zugeordneten Anschlußleiste bestehen.

3. Elektronischer Kartenleser nach einem der Ansprüche 1 und 2,
**dadurch gekennzeichnet, daß** der elektronische Kartenleser einen Speicher umfaßt, der so gestaltet ist, daß er die aufeinanderfolgenden Benutzungsdaten zur Kartenbenutzung speichern kann, wobei der besagte Speicher mittels eines gesonderten Geräts, etwa eines Abfragegeräts, ausgelesen und zurückgestellt werden kann.

4. Elektronischer Kartenleser nach Anspruch 3,
**dadurch gekennzeichnet, daß** das Auslesen des Speichers, seine Rückstellung, seine Fortschreibung und gegebenenfalls seine Rekonfiguration über eines der besagten Leseorgane, beispielsweise das Chipkarten-Leseorgan, erfolgen.

5. Elektronischer Kartenleser nach Anspruch 4,
**dadurch gekennzeichnet, daß** die besagten Chipkarten-Leseorgane den Anschluß eines Abfragegeräts ermöglichen, das eine Chipkarte umfaßt.
